# EUROPÄISCHE PATENTSCHRIFT

(11) **EP 3 696 366 B1**
(45) Veröffentlichungstag und Bekanntmachung des Hinweises auf die Patenterteilung: **19.10.2022**
(21) Anmeldenummer: 20157353.2
(22) Anmeldetag: 14.02.2020
(51) Int. Cl.: E21B 7/02, E21B 7/04, E21B 7/20, E21B 19/16

(54) **SYSTEM MIT EINER ERDBOHRVORRICHTUNG, VERFAHREN ZUM STEUERN EINES BETRIEBS EINER ERDBOHRVORRICHTUNG UND VERWENDUNG EINER ERDBOHRVORRICHTUNG**
SYSTEM WITH A EARTH BORING DEVICE, METHOD FOR CONTROLLING OPERATION OF AN EARTH BORING DEVICE AND USE OF A EARTH BORING DEVICE
SYSTÈME DOTÉ D'UN DISPOSITIF DE FORAGE DU SOL, PROCÉDÉ DE COMMANDE D'UN FONCTIONNEMENT D'UN DISPOSITIF DE FORAGE DU SOL ET UTILISATION D'UN DISPOSITIF DE FORAGE DU SOL

(30) Priorität: 15.02.2019 DE 102019001108
(43) Veröffentlichungstag der Anmeldung: 19.08.2020
(73) Patentinhaber: TRACTO-TECHNIK GmbH & Co. KG, 57368 Lennestadt (DE)
(72) Erfinder: Schmidt, Wolfgang, 57399 Kirchhundem (DE)
(74) Vertreter: König Szynka Tilmann von Renesse Patentanwälte Partnerschaft mbB Düsseldorf

(56) Entgegenhaltungen:
- DE-A1-102016 015 194
- DE-U1-202017 003 305
- US-A1- 2010 206 635
- US-A1- 2016 018 551
- US-A1- 2017 023 421
- US-B1- 8 272 467
- US-B1- 9 651 711

## Beschreibung

Die Erfindung betrifft ein System aufweisend eine Erdbohrvorrichtung, ein Verfahren zum Steuern eines Betriebs einer Erdbohrvorrichtung und eine Verwendung einer Erdbohrvorrichtung.

Erdbohrvorrichtungen werden regelmäßig von mehreren Bedienpersonen betrieben. Insbesondere ist eine Bedienperson in einem Führerstand, der meist als Bedienkabine ausgestaltet ist, erforderlich. Eine weitere Bedienperson ist meist im endseitigen Bereich eines Bohrgestänges vorhanden, die den ordnungsgemäßen Ablauf kontrolliert, wobei als endseitiger Bereich des Bohrgestänges u.a. die Startgrube und/oder die Zielgrube verstanden werden kann. Der endseitige Bereich kann damit der Bereich sein, an dem der Antrieb das Bohrgestänge in das Erdreich eintreibt, und/oder an dem der Bohrkopf aus dem Erdreich austritt. Der Stand der Technik wird durch die Dokumente US 9,651,711 B1 und DE 202017003305 U1 dargestellt.

Aufgabe der Erfindung ist es daher, ein System, ein Verfahren und eine Verwendung zu schaffen, mit dem bzw. der der Aufwand zum Einbringen der Bohrung mittels der Erdbohrvorrichtung verringert werden kann, insbesondere der Aufwand in Form des Vorsehens einer geringeren Anzahl von Bedien- und/oder Überwachungspersonen.

Die Aufgabe wird gelöst durch die Gegenstände der unabhängigen Ansprüche. Vorteilhafte Ausführungsformen sind Gegenstand der jeweiligen Unteransprüche und der Beschreibung.

Kerngedanke der Erfindung ist es, eine Erfassungseinrichtung vorzusehen, die ausgestaltet ist, das Bohrgestänge endseitig im Bereich einer Zielgrube der einzubringenden Erdbohrung zu erfassen. Das Vorsehen einer derartigen Erfassungseinrichtung schafft die Möglichkeit, dass die bisher an dieser Position als erforderlich angesehene Bedienperson ihren Standort freier wählen kann. Die für die bisherige Überwachung vorgesehen Bedienperson muss nicht mehr zwangsläufig in dem Bereich verweilen und kann den Standort und/oder den Aufgabenbereich anders gestalten. Der Aufgabenbereich, der bisher der den endseitigen Bereich des Bohrgestänges überwachenden Bedienperson zukam, kann beispielweise von der Bedienperson übernommen werden, die mit der Steuerung der Erdbohrvorrichtung betraut ist. Da die Tätigkeit nunmehr auch von der sonst mit der Steuerung betrauten Bedienperson durchgeführt werden kann, kann die bisher erforderliche weitere Bedienperson mit anderen Aufgaben betraut werden, so dass das Personal und/oder die Kosten zur Bereitstellung des Personals für das Einbringen einer Erdbohrvorrichtung verringert werden kann. Ein Mehrnutzen für das die Erdbohrvorrichtung nutzende Unternehmen ist möglich.

Die Erfindung schafft ein System, welches eine Erdbohrvorrichtung zum Bewegen eines Bohrgestänges für das Einbringen einer Erdbohrung in Erdreich aufweist. Das System weist ferner eine Erfassungseinrichtung auf, die ausgestaltet ist, das Bohrgestänge endseitig im Bereich einer Zielgrube der einzubringenden Erdbohrung zu erfassen, wobei die Erfassungseinrichtung im Bereich der Zielgrube angeordnet ist.

Im Sinne der Beschreibung ist eine "Erdbohrvorrichtung" jedwede Vorrichtung, welche insbesondere ein Gestängeschüsse aufweisendes Bohrgestänge in einem bestehenden oder zu erstellenden Kanal im Erdreich bewegt, um eine Bohrung, insbesondere eine Horizontalbohrung (HD), zu erstellen oder aufzuweiten oder Rohrleitungen oder andere lange Körper in das Erdreich einzuziehen. Bei der Erdbohrvorrichtung kann es sich insbesondere um eine HD-Vorrichtung handeln. Der Begriff "HD" (horizontal drilling, Horizontalbohrung) im Sinne der vorliegenden Beschreibung umfasst insbesondere eine bzw. einen zumindest teilweise horizontal angeordnete einzubringende Bohrung bzw. Kanal oder Rohrleitung. Eine Erdbohrvorrichtung kann damit eine ein Bohrgestänge antreibende Vorrichtung sein, die Erdreich verdrängend arbeitet, und das Bohrgestänge translatorisch und/oder rotatorisch in längsaxialer Richtung des Bohrgestänges in das Erdreich einbringt. Eine Bohrung kann durch Zug- oder Druckbeaufschlagung auf das Bohrgestänge in das Erdreich eingebracht werden. Der Begriff "Gestängeschuss" umfasst dabei im Sinne der Beschreibung nicht ausschließlich starre, einzelne miteinander mittelbar oder unmittelbar verbindbare Kraftübertragungselement, die bei einer Erdbohrvorrichtung eingesetzt werden können.

Ein vorderseitiger Abschnitt des Bohrgestänges kann als Bohrkopf oder Bohrwerkzeug ausgestaltet sein. Ferner kann das Bohrgestänge, insbesondere in einem vorderseitigen Bereich, ein Sondengehäuse aufweisen.

Eine "Erfassungseinrichtung" umfasst im Sinne der Beschreibung jedwede Einrichtung, die ausgestaltet ist, das Vorhandensein eines Bohrgestänges, insbesondere eines Endes eines Bohrgestänges bzw. eines Gestängeschusses bzw. eines Bohrkopfs in einem Bereich zu erfassen. Die Erfassungseinrichtung kann als eine Einrichtung ausgestaltet sein, die eine Veränderung des Vorhandenseins des Endes eines Bohrgestänges bzw. Gestängeschusses bzw. des Bohrkopfs ermittelt.

Im Sinne der Beschreibung umfasst der Begriff "endseitig im Bereich der Erdbohrvorrichtung" insbesondere den Abschnitt des Bohrgestänges, der in Kontakt mit dem Antrieb der Erdbohrvorrichtung ist bzw. kommt, der ausgestaltet ist, das Bohrgestänge in das Erdreich einzubringen. In diesem Bereich ist es regelmäßig vorgesehen, einen Gestängewechsel durchzuführen, um das Bohrgestänge mittels eines weiteren Gestängeschusses, zu verlängern bzw. zu verkürzen. Ein Gestängewechsel bedarf u.U. einer besonderen Aufmerksamkeit einer Bedienperson, da beispielsweise das schon verbohrte Bohrgestänge geklemmt werden kann, um auf das Bohrgestänge ausgeübte Zug- und/oder Druckkräfte zu kompensieren. Im Sinne der Beschreibung umfasst der Begriff "endseitig im Bereich einer Zielgrube der einzubringenden Erdbohrung" den Bereich, in dem ein Bohrgestänge, insbesondere mit dem vorderseitigen Bohrkopf oder Bohrwerkzeug aus dem Erdreich austritt. In der Regel tritt das Bohrgestänge aus dem Erdreich in eine Zielgrube, wobei der Begriff "Zielgrube" im Sinne der Beschreibung als jedweder Bereich zu verstehen ist, in den das Bohrgestänge geplant aus dem Erdreich austritt. Der Bereich muss nicht zwingend als "Grube" ausgestaltet sein; der Begriff "Zielgrube" stellt darauf ab, dass dieser Bereich gezielt als Austritt aus dem Erdreich angesteuert wird. Der Begriff "Zielgrube" umfasst auch Zwischenpositionen, von denen aus die Erdbohrung verlängert und oder weiter geführt werden kann.

In einer bevorzugten Ausführungsform ist die Erfassungseinrichtung eine Kamera, ein Bereichsscanner und/oder ein Bewegungsscanner, wodurch bekannte Vorrichtungen, deren Handhabung und Verwendung - wenn auch für andere Bereiche - üblich ist, verwendet werden können.

Im Sinne der Beschreibung ist eine Kamera jedwede Vorrichtung, die ein Bild eines Bereichs aufnimmt, welches insbesondere auf der Anzeigeeinrichtung dargestellt werden kann. Die Anzeigeeinrichtung kann dazu die Signale bzw. Informationen der Kamera zumindest auf einem Teil der Anzeigeeinrichtung anzeigen. Die Signale können unmittelbar dargestellt oder vor der Darstellung von der Steuereinheit der Anzeigevorrichtung und/oder der Steuereinrichtung der Erdbohrvorrichtung aufbereitet werden.

Im Sinne der Beschreibung ist ein Bereichsscanner eine Vorrichtung, die eine Veränderung eines Vorhandenseins in einem Bereich ermitteln bzw. erfassen kann. Der Bereichsscanner kann als Lichtschranke, Lichtvorhang oder ähnliches ausgestaltet sein. Der Bereichsscanner kann unter Verwendung von Ultraschall, elektromagnetischer Strahlungen im Infrarotbereich oder Radarwellen ausgestaltet sein.

Im Sinne der Beschreibung ist ein Bewegungsscanner eine Vorrichtung, die eine Bewegung in einem Bereich ermitteln bzw. erfassen kann.

Sowohl der Bereichsscanner als auch der Bewegungsscanner können derart verwendet werden, dass, wenn eine Bewegung oder ein Eindringen in einen Bereich in irgendeiner Form erfasst wurde, ein Signal erzeugt wird. Dieses Signal kann an eine elektronische oder elektrische Vorrichtung übermittelt werden. Dabei kann vorgesehen sein, dass ein Signal eines Bereichsscanners oder Bewegungsscanners beispielsweise an eine Anzeigeeinrichtung übermittelt wird und damit ein "Ansprechen" des Bereichsscanners und/oder des Bewegungsscanners somit an einer Anzeigeeinrichtung angezeigt wird. Dabei kann es vorgesehen sein, dass, sobald der Bereichsscanner und/oder der Bewegungsscanner ein Eindringen eines Objekts in den Bereich und/oder eine Bewegung in einem Bereich ermittelt haben, ein Bild einer Kamera auf einer Anzeigeeinrichtung dargestellt wird, wobei die Kamera auf den endseitigen Bereich der Erdbohrvorrichtung und/oder endseitigen Bereich einer Zielgrube der einzubringenden Erdbohrung ausgerichtet ist. Damit kann - zumindest in einer bevorzugten Ausführungsform - die Anzeige eines Bildes einer gegebenenfalls vorhandenen Kamera erst dann erfolgen, wenn Bereichsscanner und/oder Bewegungsscanner eine Veränderung oder ein Vorhandensein des Endes eines Bohrgestänges bzw. Gestängeschusses bzw. des Bohrkopfs ermittelt haben.

In einer bevorzugten Ausführungsform ist eine Anzeigeeinrichtung zum Anzeigen eines von der Erfassungseinrichtung erfassten Zustands vorhanden, wobei die Erfassungseinrichtung einen Sender und die Anzeigeeinrichtung einen Empfänger aufweist, und die Anzeigeeinrichtung zum Prozessieren von Signalen zum Darstellen des von der Erfassungseinrichtung erfassten Zustands ausgestaltet ist. Die Erfassungseinrichtung kann damit Übertragungsmittel aufweisen, die ausgestaltet sind, Signale zur Anzeigeeinrichtung zu übertragen, wobei die Anzeigeeinrichtung ausgestaltet ist, um die Signale der Erfassungseinrichtung derart zu prozessieren, dass die Signale für eine Bedienperson auf der Anzeigeeinrichtung dargestellt werden können. Die Übertragung des Signals bzw. der Signale zwischen Erfassungseinrichtung und Anzeigeeinrichtung kann unmittelbar erfolgen. Es kann jedoch auch vorgesehen sein, dass die Erfassungseinrichtung ein Signal mittelbar an die Anzeigeeinrichtung übermittelt. Beispielsweise kann die Erfassungseinrichtung das Signal an eine Steuereinrichtung der Erdbohrvorrichtung übermitteln und die Steuereinrichtung das Signal unverändert oder verarbeitet an die Anzeigeeinrichtung übermitteln. Ein großes Maß an Flexibilität kann geschaffen werden.

Im Sinne der Beschreibung ist eine "Anzeigeeinrichtung" jedwede Vorrichtung, mit der das Signal der Erfassungseinrichtung visualisiert werden kann. Bei der Anzeigeeinrichtung kann es sich insbesondere um eine elektrische oder elektronische Anzeige handeln, die insbesondere als Flüssigkristallanzeige (LCD), Leuchtdioden (LED)-Matrixanzeige, Fluoreszenzanzeige (VFD) oder ähnliches ausgestaltet sein kann. Insbesondere kann mit der Anzeigeeinrichtung eine, insbesondere intuitiv verständliche, Bilddarstellung möglich sein. Die Anzeigeeinrichtung kann als ein universelles Anzeigeinstrument in Form eines Bildschirms, Monitors, Displays, Tablett, Notepad, IPAD, Smartdisplays, SmartPhone oder ähnlichem ausgestaltet sein. Mittels der Anzeigeeinrichtung kann eine Visualisierung des Betriebs der Erdbohrvorrichtung im Hinblick auf mindestens einen Parameter möglich sein. Die Bedienperson kann die Anzeigeeinrichtung vor Ort mitführen. Die Anzeigeeinrichtung kann jedoch auch in einem Führerstand angeordnet sein.

Die Anzeigeeinrichtung kann insbesondere einen Prozessor aufweisen, der als Rechenwerk mit elektronischen Schaltungen ausgestaltet ist, um Befehle auszuführen. Der Prozessor kann programmiert werden und ist zur Abarbeitung von Befehlen ausgestaltet. Die Anzeigeeinrichtung kann ein Betriebssystem aufweisen, welches beispielsweise für eine Verbesserung und/oder Anpassung an Änderungen zur Kommunikation mit der Erfassungseinrichtung oder einer Darstellung modifiziert werden kann. Eine Veränderung des Betriebssystems kann insbesondere nur dann erlaubt werden, sofern ein Passwort eingegeben wurde und/oder die Anzeigeeinrichtung mit einer Schnittstelle eines Computers, einem Dongle oder ähnlichem verbunden ist. Insbesondere kann der Prozessor Eingaben einer Bedienperson in Form einer Abfrage, welche Parameter, gegebenenfalls in welcher Darstellungsform, dargestellt werden sollen, erkennen, abfragen, verarbeiten, weiterleiten und/oder weitere Befehle eines Programms abarbeiten. Der Prozessor kann ein Programm abarbeiten, das Eingaben einer Bedienperson abfragt oder empfängt, die Eingaben der Bedienperson verarbeitet, und dann gegebenenfalls nach Abruf von Parametern von der Steuereinrichtung und/oder Signalen der Erfassungseinrichtung die Parameter und/oder Signale darstellt. Die Anzeigeeinrichtung kann eine tragbare Energieversorgung, insbesondere in Form einer oder mehreren Batterien, Akkumulatoren oder ähnlichem, aufweisen.

Die Anzeigeeinrichtung kann eine Eingabe von Parametern, Funktionen und/oder Änderung der Darstellung auf bzw. an der Anzeigeeinrichtung ermöglichen, die - sofern die Anzeigeeinrichtung ein berührungsempfindliches Display aufweist - als sogenannte Eingaben mittels Berühren, Tippen, Streichen des Displays oder ähnlichem erfolgen können. Es ist aber auch alternativ oder zusätzlich möglich, dass Eingaben an der Anzeigeeinrichtung mittels einer integrierten Vorrichtung oder einer zusätzlichen ankoppelbaren Vorrichtung (beispielsweise mittels Kabelverbindung, und/oder kabellos, beispielsweise mittels Bluetooth) ermöglicht werden können. Bei der integrierten oder zusätzlichen Vorrichtung kann es sich um ein mechanisch betätigbares Betätigungselement (beispielsweise ein Druckknopf, eine Wipptaste), eine Tastatur, eine Maus, einen Trackball, ein Grafik-Tablet, ein Mikrofon, eine Kamera oder eine ähnliche Eingabevorrichtung, insbesondere in Form einer sonst im Computerbereich bekannten Peripherie-Einrichtung handeln, mit der Tasteingaben oder Schreibeingaben, Audio-Eingaben (Sprach-Eingabe) und/oder Video-Eingaben (Gestik, Bewegung oder ähnliches) möglich sind.

Der Begriff "Steuereinrichtung" im Sinne der Beschreibung umfasst eine Ausgestaltung einer Steuerung, mittels derer eine gerichtete Beeinflussung der Erdbohrvorrichtung im Betrieb, d.h. während der Durchführung oder zum Starten oder Stoppen einer Erdbohrung, möglich ist. Die Steuereinrichtung kann insbesondere elektrisch oder elektronisch ausgestaltet sein. Die von der Bedienperson eingegebenen Parameter können von der Steuereinrichtung - gegebenenfalls umgewandelt und/oder aufbereitet in elektrische Signale - als Eingaben für den Betrieb der Erdbohrvorrichtung verwendet werden. Die Erdbohrvorrichtung kann damit mittels einer Eingabe eines Parameters, der gegebenenfalls in ein elektrisches Signals umgewandelt wurde, betrieben bzw. gesteuert werden.

Als "Parameter" im Sinne der Beschreibung wird eine Eingabemöglichkeit verstanden, mit der eine gerichtete Beeinflussung des Betriebs der Erdbohrvorrichtung möglich ist. Der Parameter kann als Eingabesignal an die Steuereinrichtung übermittelt werden, mittels dem die Steuereinrichtung den Betrieb der Erdbohrvorrichtung steuert. Ein Parameter kann beispielsweise ein Starten des Bohrens mit der Erdbohrvorrichtung oder ein Stoppen eines mit der Erdbohrvorrichtung durchgeführten Bohrens bewirken. Es ist beispielsweise möglich, dass eine Bedienperson den Parameter "Start" eingibt und ein mit der Eingabe entsprechend verknüpftes Eingabesignal an die Steuereinrichtung übermittelt wird, welches ein Starten des Bohrens bewirkt. In analoger Weise kann eine Bedienperson den Parameter "Stopp" eingeben und ein entsprechendes hiermit verbundenes Eingabesignal an die Steuereinrichtung übermittelt werden, die ein Stoppen eines mit der Erdbohrvorrichtung durchgeführten Bohrens bewirkt. Weitere Parameter, die den Betrieb der Erdbohrvorrichtung beeinflussen bzw. verändern sind möglich, wobei diese Parameter von einer Bedienperson eingegeben und von der Eingabeeinrichtung in ein Eingabesignal umgewandelt und an die Steuereinrichtung übermittelt werden können.

Die Eingaben, insbesondere eines Parameters, zum Betrieb der Erdbohrvorrichtung können mittels einer Eingabeeinrichtung erfolgen. Der Begriff "Eingabeeinrichtung" im Sinne der Beschreibung umfasst jedwede elektrische oder elektronische Vorrichtung, die geeignet ist, eine Eingabe einer Bedienperson in ein elektrisches Signal umzuwandeln, welches ohne weiter aufbereitet zu werden oder unter Zwischenschaltung einer Aufbereitung des Signals, insbesondere eines Prozessierens in einer oder mehreren Schaltungen, beispielsweise in einem Verstärker, an die Steuereinrichtung übermittelt werden kann, um als Eingabe bzw. als Eingabesignal der Steuereinrichtung zu dienen. Die Eingabeeinrichtung kann als Schnittstelle zwischen einer Bedienperson und der Steuereinrichtung verstanden werden. Die Eingabeeinrichtung kann eine tragbare Energieversorgung, insbesondere in Form einer oder mehreren Batterien, Akkumulatoren oder ähnlichem, aufweisen.

In einer bevorzugten Ausführungsform weisen die Eingabeeinrichtung und die Anzeigeeinrichtung getrennte Energieversorgungen auf. Hierdurch ist eine vergrößerte Flexibilität möglich. Die Energieversorgung der einzelnen Einrichtungen kann geringer dimensioniert sein, als eine Energieversorgung für die gemeinsame Energieversorgung von Eingabeeinrichtung und Anzeigeeinrichtung. Zudem kann auf die Energieversorgung einer üblichen Anzeigeeinrichtung zurückgegriffen werden.

Die Eingabeeinrichtung kann insbesondere einen Prozessor aufweisen, der als Rechenwerk mit elektronischen Schaltungen ausgestaltet ist, um Befehle auszuführen. Der Prozessor kann programmiert werden und ist zur Abarbeitung von Befehlen ausgestaltet. Die Eingabeeinrichtung kann ein Betriebssystem aufweisen, welches beispielsweise für eine Verbesserung und/oder Anpassung an Änderungen einer Erdbohrvorrichtung modifiziert werden kann. Eine Veränderung des Betriebssystems kann insbesondere nur dann erlaubt werden, sofern ein Passwort und/oder die Eingabeeinrichtung mit einer Schnittstelle eines Computers, einem Dongle oder ähnlichem verbunden ist. Insbesondere kann der Prozessor Eingaben einer Bedienperson in Form der Parameter erkennen, abfragen, verarbeiten, weiterleiten und/oder weitere Befehle eines Programms abarbeiten. Der Prozessor kann ein Programm abarbeiten, das Eingaben einer Bedienperson abfragt oder empfängt, die Eingaben der Bedienperson verarbeitet, Einstellungen zur Eingabe der Bedienperson einstellt, die Eingaben an die Steuereinrichtung überträgt und/oder Signale von der Steuereinrichtung empfängt, prozessiert und/oder umsetzt.

Die Eingabeeinrichtung kann funktional mit der Steuereinrichtung gekoppelt sein. Dabei umfasst der Begriff "funktional gekoppelt" im Sinne der Beschreibung eine, insbesondere unidirektionale oder bidirektionale Verbindung der genannten Einrichtungen, um insbesondere Signale von einer der Einrichtungen, insbesondere der Eingabeeinrichtung, bereitzustellen und mit der anderen Einrichtung, insbesondere der Steuereinrichtung, zu empfangen und/oder empfangene Signale zu verarbeiten. Die funktionale Kopplung kann unmittelbar oder mittelbar durch Zwischenschaltung weiterer Elemente oder Einrichtungen erfolgen.

In einer bevorzugten Ausführungsform ist die Anzeigeeinrichtung (a) kabellos oder (b) kabelgebunden mit der Steuereinrichtung der Erdbohrvorrichtung verbunden. Hierdurch ist eine gewisse Mobilität der Anzeigeeinrichtung möglich. Im Falle einer kabellosen Verbindung wird die Mobilität der Anzeigeeinrichtung in Bezug auf die Bewegungsfreiheit einer Bedienperson erhöht.

In einer bevorzugten Ausführungsform ist die Anzeigeeinrichtung für einen kabellosen Datenaustausch mittels WLAN ausgestaltet. Hierdurch kann ein Datenprotokoll bzw. Transferprotokoll verwendet werden, welches bekannt und gut handhabbar ist. Insbesondere kann der Datenaustausch zwischen der Anzeigeeinrichtung und der Steuereinrichtung der Erdbohrvorrichtung getrennt von einem Datenaustausch der Eingabeeinrichtung mit der Steuereinrichtung der Erdbohrvorrichtung vorliegen. Beispielsweise kann für den Austausch von Daten zwischen der Eingabeeinrichtung und der Steuereinrichtung der Erdbohrvorrichtung eine höhere Sicherheit in der Kommunikation erreicht werden, da unterschiedliche Frequenzbänder und/oder Übertragungsprotokolle verwendet werden.

In einer bevorzugten Ausführungsform können mittels der Anzeigeeinrichtung - neben einer Darstellung der von der Erfassungseinrichtung bereitgestellten, gegebenenfalls aufbereiteten bzw. prozessierten Signale - einige oder alle vorgenannten Parameter für den Betrieb der Erdbohrvorrichtung abgerufen und/oder dargestellt werden. Die Anzeige kann dabei so ausgestaltet sein, dass nicht alle Parameter gleichzeitig angezeigt werden, sondern je nach Eingabe der Bedienperson ein oder mehrere Parameter angezeigt werden, die die Bedienperson für die Anzeige wählen kann oder die von einer Befehlsfolge der Steuereinrichtung für die Durchführung und/oder Eingabe eines Parameters als wichtig und/oder notwendig erachtet werden. So kann die Anzeigeeinrichtung mit der Eingabeeinrichtung derart gekoppelt sein, dass - wenn die Bedienperson mittels der Eingabeeinrichtung einen Parameter eingeben möchte - mit diesem Parameter in Zusammenhang stehende Parameter, Daten, Informationen und/oder Hinweise auf der Anzeigeeinrichtung dargestellt werden. Die Anzeigeeinrichtung kann dabei derart ausgestaltet sein, dass - sofern ein geändertes oder vorbestimmtes Signal von der Erfassungseinrichtung erkannt wird - eine Darstellung angezeigt wird, die den erfassten Zustand repräsentiert.

Die Anzeigeeinrichtung kann derart ausgestaltet sein, dass sie wahlweise mit einer Eingabeeinrichtung mechanisch verbunden werden kann und/oder die Anzeigeeinrichtung mit einer Ankopplung an der Erdbohrvorrichtung mechanisch verbunden werden kann. Zum einen kann es damit möglich sein, dass die Anzeigeeinrichtung mit der Eingabeeinrichtung eine gemeinsam handhabbare Einheit bildet, die von einer Bedienperson gehalten werden kann. Zum anderen ist damit möglich, dass die Anzeigeeinrichtung mit der Erdbohrvorrichtung verbunden werden kann, um beispielsweise am Führerstand die Signale der Erfassungseinrichtung dargestellt zu bekommen.

In einer bevorzugten Ausführungsform sind die Anzeigeeinrichtung und die Eingabeeinrichtung derart funktional verbunden, dass bei einer Eingabe an der Eingabeeinrichtung die Eingabe mittels der Anzeigeeinrichtung angezeigt wird. Die Eingabeeinrichtung kann der Anzeigeeinrichtung unmittelbar oder mittelbar über die Steuereinrichtung der Erdbohrvorrichtung ein Signal übermitteln, mittels dem angezeigt wird, welcher Parameter mit der Erdbohrrvorichtung geändert bzw. eingegeben werden soll, so dass die Anzeigeeinrichtung den momentanen Wert des Parameters und/oder in Zusammenhang mit dem Parameter stehende Parameter anzeigt. Beispielsweise kann bei der Eingabe des Parameters "Gestängewechsel durchführen" mittels der Eingabeeinrichtung auf der Anzeigeeinrichtung in Reaktion auf diese Eingabe das Signal der Erfassungseinrichtung, die endseitig im Bereich der Erdbohrvorrichtung vorgesehen ist, dargestellt werden.

In einer bevorzugten Ausführungsform weist die Anzeigeeinrichtung einen Eingabebereich auf, der benachbart zur Eingabeeinrichtung ist, wenn die Eingabeeinrichtung und die Anzeigeeinrichtung miteinander verbunden sind. Hierdurch kann die Möglichkeit geschaffen werden, dass zusätzlich zu der Eingabemöglichkeit, die durch die Eingabeeinrichtung besteht, eine weitere Eingabe der Bedienperson an der Anzeigeeinrichtung möglich ist. Bei der Eingabe an der Anzeigeeinrichtung kann es sich insbesondere um eine Eingabe handeln, mit der die anzuzeigende Information, die auf der Anzeigeeinrichtung angezeigt wird, verändert werden kann. Insbesondere kann die Art der Darstellung verändert werden. Ein Abruf von Informationen, die die Erdbohrvorrichtung betreffen, ist möglich. Zudem ist durch den Eingabebereich, der auf der Anzeigevorrichtung vorgesehen ist, eine klare Trennung der Eingaben, die die Bedienperson vornehmen kann, möglich. Die Eingaben zum Wechseln beispielsweise der anzuzeigenden Information müssen nicht an der Eingabeeinrichtung vorgesehen sein; die Eingabeeinrichtung kann sich auf die Eingabe der für den Betrieb der Erdbohrvorrichtung notwendigen Parameter beschränken. Die Eingabemöglichkeit mittels der Eingabe an der Anzeigeeinrichtung kann mittels eines aus dem Stand der Technik bekannten berührungsempfindlichen Displays erfolgen.

In einer bevorzugten Ausführungsform können mittels der Anzeigeeinrichtung alle vorgenannten Parameter für den Betrieb der Erdbohrvorrichtung abgerufen und/oder dargestellt werden. Die Anzeige kann dabei so ausgestaltet sein, dass nicht alle Parameter gleichzeitig angezeigt werden, sondern je nach Eingabe der Bedienperson ein oder mehrere Parameter angezeigt werden, die die Bedienperson für die Anzeige wählen kann oder die von einer Befehlsfolge der Steuereinrichtung für die Durchführung und/oder Eingabe eines Parameters als wichtig und/oder notwendig erachtet werden.

In einer bevorzugten Ausführungsform weist die Anzeigeeinrichtung eine Steuereinheit auf, die für eine kontextsensitive Anzeige von Informationen auf der Anzeigeeinrichtung ausgestaltet ist. So ist es möglich, dass die Anzeigeeinrichtung mit der Eingabeeinrichtung derart gekoppelt sein kann, dass - wenn die Bedienperson mittels der Eingabeeinrichtung einen Parameter eingeben möchte bzw. eingibt - mit diesem Parameter in Zusammenhang stehende Parameter, Daten, Informationen und/oder Hinweise auf der Anzeigeeinrichtung dargestellt werden, Beispielsweise kann mittels der Steuereinheit ein Wert eines Parameters für den Betrieb der Erdbohrvorrichtung, Informationen im Zusammenhang mit dem Parameter und/oder Hinweise für die Einstellung dann dargestellt werden, wenn sie für die Bedienperson wichtig ist und/oder die Bedienperson einen derartigen Parameter eingeben oder verändern möchte. Führt die Bedienperson beispielsweise mit der Eingabeeinrichtung eine Eingabe eines Parameters durch, so kann mittels der Steuereinheit der von der Bedienperson beeinflusste bzw. geänderte Parameter, auch während der Änderung bzw. der Eingabe, dargestellt werden. Es ist beispielsweise möglich, dass mittels der Eingabeeinrichtung ein Parameter kontinuierlich verringert bzw. erhöht wird, dessen Wert auf der Anzeigeeinrichtung dargestellt wird. Es ist auch möglich, dass die Steuereinrichtung mit der Steuereinheit kommuniziert, um Informationen, einen Wert für einen Parameter, Hinweise und/oder Fehlermeldungen darzustellen. Beispielsweise kann die Steuereinrichtung der Erdbohrvorrichtung der Steuereinheit der Anzeigeeinrichtung mitteilen, wenn ein Gestängeschuss mit dem verbohrten Bohrgestänge verbunden werden muss, um die Erdbohrung weiter einzubringen. Ferner können Zustände der Erdbohrvorrichtung dargestellt werden, die eine Handlung der Bedienperson erfordern.

In einer bevorzugten Ausführungsform ist die Eingabeeinrichtung als (a) kabelgebundene und/oder (b) kabellose Fernbedienung ausgestaltet. In einer besonders bevorzugten Ausführungsform ist die Eingabeeinrichtung eine kabellose Fernbedienung, wodurch die Möglichkeit geschaffen wird, dass sich die Bedienperson mit der Eingabeeinrichtung im Wesentlichen frei bewegen kann, ohne auf ein Kabel achten zu müssen, mit dem die Eingabeeinrichtung mit der Erdbohrvorrichtung verbunden ist. Eine kabelgebundene Fernbedienung bietet den Vorteil einer im Wesentlichen ungestörten Übertragung von Signalen über das Kabel.

Eine "Fernbedienung" im Sinne der Beschreibung umfasst ein elektrisches bzw. elektronisches Handgerät, das geeignet ist, um mit diesem beabstandet zur Erdbohrvorrichtung den Betrieb der Erdbohrvorrichtung mittels der Eingabe eines Parameters zu steuern. Im Sinne der Beschreibung ist "beabstandet zur Erdbohrvorrichtung" derart zu verstehen, dass eine direkte Eingabe mittels einer an der Erdbohrvorrichtung befestigten Vorrichtung nicht notwendig ist. Insbesondere kann eine Bedienperson außerhalb der Bedienkabine der Erdbohrvorrichtung den Betrieb der Erdbohrvorrichtung durch Eingabe eines Parameters für den Betrieb der Erdbohrvorrichtung steuern.

In einer bevorzugten Ausführungsform ist das Eingeben des mindestens einen Parameters (a) ein Einstellen eines bzw. einer auf ein Bohrgestänge der Erdbohrvorrichtung aufgebrachten Drehmoments und/oder Drehzahl, (b) ein Einstellen einer auf ein Bohrgestänge aufgebrachten linearen Vorschubkraft und/oder linearen Vorschubgeschwindigkeit, (c) ein Einstellen einer Schlagfrequenz eines Schlagkolbens, (d) ein Einstellen einer Schlagamplitude eines Schlagkolbens, (e) ein Einstellen einer Durchflussmenge und/oder einer Druckbeaufschlagung einer Spülflüssigkeit, (f) ein Durchführen eines Gestängewechsels, (g) ein Durchführen einer Gestängeschmierung und/oder (h) ein Ändern eines Bohrkopftyps. Dabei kann eine Berücksichtigung erfolgen, um welches Gestänge es sich handelt. Insbesondere bei einem Doppelrohrgestänge kann das Drehmoment und/oder die Drehzahl unabhängig für ein Innenrohrgestänge gewählt werden, so dass für ein Doppelrohrgestänge sowohl Drehmoment und/oder Drehzahl für Innenrohrgestänge und/oder Außenrohrgestänge eingestellt werden können. Hierdurch kann im Wesentlichen jedwede Eingabe vorgenommen werden, die für den Bohrbetrieb der Erdbohrvorrichtung relevant sein kann. Neben dem Starten oder Stoppen eines mit der Erdbohrvorrichtung durchgeführten Bohrens können an die Steuereinrichtung die vorgenannten Parameter übermittelt werden.

Für das Einstellen eines/einer auf das Bohrgestänge der Erdbohrrichtung aufgebrachten Drehmoments/Drehzahl kann von der Steuereinrichtung in Abhängigkeit vom von der Bedienperson mittels der Eingabeeinrichtung eingegebenen Parameter ein Signal an den Antrieb der Erdbohrvorrichtung übermittelt werden, der mit dem Bohrgestänge in Verbindung steht, so dass das/die von der Bedienperson gewählte Drehmoment/Drehzahl eingestellt werden kann. Der Parameter kann ein Signal sein, das mit der Größe des Drehmoments/Drehzahl korrespondiert. Das Einstellen eines linearen Vortriebs des Bohrgestänges kann sowohl die Kraft bzw. den Druck und/oder Geschwindigkeit, mit dem der Antrieb auf das mit dem Antrieb verbundene Bohrgestänge wirkt, eingestellt werden. Das Einstellen des linearen Vorschubs kann auch umfassen, ob der lineare Vorschub eine Zug- oder Druckkraft ist, d.h., ob das Bohrgestänge durch das Erdreich gezogen oder geschoben wird. Insofern umfasst der Begriff Vorschub beide Richtungen sowohl ein Ziehen als auch ein Drücken des Bohrgestänges, so dass auf das Bohrgestänge eine Zug- oder eine Schubkraft aufgebracht werden kann. Der Parameter kann damit ein Signal sein, das mit der Zug- oder Druckkraft korrespondiert. Beim Einbringen einer Bohrung in das Erdreich kann Spülflüssigkeit, insbesondere in Form von Bentonit, verwendet werden. Die Spülflüssigkeit kann durch das Bohrgestänge geleitet werden und im vorderseitigen Bereich des Bohrgestänges austreten. Als Parameter kann eine Durchflussmenge/ein Druck der Spülflüssigkeit eingestellt werden, die/der an die Gegebenheiten im Erdreich angepasst werden kann. Beim Bohren mit einem Bohrgestänge ist es im Verlauf der Erdbohrung notwendig, das Bohrgestänge zu verlängern, wobei insbesondere weitere Gestängeschüsse mit dem schon im Erdreich verbohrten Bohrgestänge verbunden werden. Hierzu kann eine Eingabe erforderlich sein, die das Durchführen eines Gestängewechsels, d.h. das Verbinden eines weiteren Gestängeschusses, insbesondere aus einem Gestängemagazin, mit dem schon verbohrten Bohrgestänge, durchführt. Der Parameter kann damit eine Betätigung sein, die mit dem Befehl "Jetzt Gestängewechsel" korrespondiert. Beim Gestängewechsel kann das schon im Erdreich verbohrte Bohrgestänge geklemmt werden, um die axiale und/oder Winkellage des schon verbohrten Bohrgestänges zu fixieren. Ferner kann das Eingeben des Parameters ein Ändern des Bohrkopftyps beinhalten, was insbesondere dann erforderlich sein kann, wenn nach dem Durchführen einer Pilotbohrung, d.h. einer ersten Bohrung, die beispielsweise durch Schieben im Erdreich erstellt wurde, der Bohrkopftyp in einen Aufweitbohrkopf verändert wird, der durch die zuvor erzeugte Pilotbohrung zum Aufweiten derselben gezogen wird.

Sofern die Erdbohrvorrichtung als Rammbohrvorrichtung ausgestaltet ist, können Schlagfrequenz des Schlagkolbens der Rammbohrvorrichtung und/oder Schlagamplitude des Schlagkolbens der Rammbohrvorrichtung eingestellt werden. Der Begriff "Rammbohrvorrichtung" oder "Erdrakete", der im Wesentlichen synonym zum Begriff Rammbohrvorrichtung verwendet wird, umfasst im Sinne der Beschreibung ein selbstgetriebenes Schlaggerät, welches Erdreich verdrängend arbeitet, und eine Leitung oder ein Rohr schlagend in das Erdreich einbringen kann. Dabei kann der Begriff Rammbohrvorrichtung Erdbohrvorrichtungen umfassen, bei denen die Bohrkopfspitze längsbeweglich in einem Gehäuse angeordnet ist. Bei der Bohrkopfspitze kann es sich insbesondere um einen Meißel handeln. Eine Rammbohrvorrichtung kann sowohl eine Ein-Takt-Vorrichtung als auch eine Mehr-Takt-Vorrichtung sein. Bei einer Ein-Takt-Vorrichtung trifft der Schlagkolben auf die Bohrkopfspitze und im selben Moment auf das Gehäuse. Bei einer mehrtaktigen Vorrichtung, insbesondere einer Zwei-Takt-Vorrichtung, schlägt der Schlagkolben zunächst auf die Bohrkopfspitze, die im ersten Takt somit vorauseilt. Das Gehäuse wird im einem folgenden Takt, insbesondere in einem zweiten Takt, vom Schlagkolben beaufschlagt. Bei einer Mehr-Takt-Vorrichtung können Spitzenwiderstand und Mantelreibung voneinander getrennt und damit leichter überwunden werden.

In einer bevorzugten Ausführungsform weist die Eingabeeinrichtung mindestens ein mechanisch betätigbares Betätigungselement auf. Bei dem mechanisch betätigbaren Betätigungselement kann es sich um jedwedes mechanisch bzw. manuell betätigbare Betätigungselement handeln. Ein Drehsteller, ein Control-Stick und/oder ein Druccknopf sind dabei bevorzugte Ausführungsformen eines mechanisch betätigbaren Betätigungselements. Verschiedenartige Betätigungselemente sind an der Eingabeeinrichtung möglich.

Ein Control-Stick ist im Sinne der Beschreibung ein Betätigungselement zur Eingabe von insbesondere zweidimensionalen Signalen. Ein Control-Stick kann ein von einer Oberfläche sich erstreckendes Element aufweisen, das sich in der Regel in mehrere Richtungen neigen lässt. Das Element kann insbesondere stab-, stempel-, knüppeloder hebelförmig ausgestaltet sein. Das Element kann sich von einer Fläche in einer Höhe erstrecken, die 7 cm, bevorzugt 6 cm, bevorzugt 5 cm, bevorzugt 4 cm, bevorzugt 3 cm, bevorzugt 2 cm, bevorzugt 1 cm, nicht überschreitet. Der Durchmesser des Elements kann insbesondere kleiner als 5 cm, bevorzugt 4 cm, bevorzugt 3 cm, bevorzugt 2 cm, sein. Ein Control-Stick im Sinne der Beschreibung kann auch als Analog-Stick oder Joy-Stick bezeichnet werden und kann diesem in der Funktion gleichwertig sein. Der Begriff Control-Stick umfasst auch ein Steuerkreuz, mit dem eine Eingabe von zweidimensionalen Signalen möglich ist. Bei dem Control-Stick kann ein Signal erzeugt werden, das von der Position des Elements oder des Steuerkreuzes in Relation zu einer Standard- bzw. Ruheposition des Elements oder des Steuerkreuzes abhängig ist. Es kann vorgesehen sein, dass der Control-Stick einzelne elektrische Signale beim Betätigen liefert und/oder kontinuierlich ein elektrisches Signal in Form von Spannungen und/oder Ströme liefert, wobei je ein Potentiometer für eine der Dimensionen, in denen das Element oder das Steuerkreuz neigbar ist, verwendet werden kann; beispielweise ein Potentiometer für die Position oben/unten und ein Potentiometer für die Position links/rechts. Durch die Änderung der Position bzw. Lage des Elements oder des Steuerkreuzes des Control-Sticks in Bezug auf die Ruhe- bzw. Standardposition kann sich die Spannung ändern. Die Größe und/oder Anordnung des Control-Sticks an der Eingabeeinrichtung kann derart ausgestaltet sein, dass eine Betätigung mittels eines Daumens und/oder eines Fingers einer Bedienperson möglich ist, insbesondere ist eine Betätigung des Control-Sticks möglich, ohne den Control-Stick zu umgreifen. Sofern ausgeführt ist, dass der Control-Stick für eine Erzeugung von Signalen in Abhängigkeit einer Bewegung in mindestens zwei Dimensionen ausgestaltet ist, so umfasst dieses auch die Möglichkeit, dass eine Eingabe für eine Steuerung des Betriebs der Erdbohrvorrichtung mittels eines Control-Sticks vorgesehen sein kann, bei der der Control-Stick keine Signale hinsichtlich der Bewegung in einer der Dimensionen erzeugt und/oder Signale hinsichtlich der Bewegung in einer der Dimensionen nicht von der Steuereinrichtung berücksichtigt werden bzw. berücksichtigt werden müssen.

Ein Drehsteller bzw. Drehknopf im Sinne der Beschreibung kann ein Potentiometer aufweisen bzw. durch dieses gebildet sein. Von Vorteil sind die Drehsteller im Wesentlichen wartungsfrei und unempfindlich gegenüber Vibrationen; ferner ist im ausgeschalteten Zustand eine Drehung am Drehsteller wirkungslos.

Bei einem Druckknopf im Sinne der Beschreibung handelt es sich um ein Betätigungselement, welches als Baugruppe ausgestaltet sein kann, die eine elektrisch leitende Verbindung herstellt oder trennt. Der Druckknopf kann als Kippschalter oder als einfacher Schalter ausgestaltet sein. Es hat sich herausgestellt, dass es vorteilhaft ist, dass ein Betätigungshub eines Druckknopfes mindestens mehr als 2 mm betragen sollten, um als "gewollte" Betätigung zu gelten. Bevorzugt werden Betätigungshübe von mehr als 2,3 mm, wobei mit Handschuhen auch Betätigungshübe von mehr als 3 mm, bevorzugt mehr als 5 mm, insbesondere bevorzugt mehr als 6 mm, noch weiter bevorzugt mehr als 7 mm vorgesehen sein können. Für den Durchmesser eines Druccknopfes hat es sich als vorteilhaft erwiesen, dass der Durchmesser des Druckknopfes mehr als 5 mm, insbesondere mehr 7 mm, für eine Betätigung mittels eines Fingers einer Bedienperson betragen sollte. Bei einer Betätigung mittels eines Daumens einer Bedienperson kann der Durchmesser eines Druckknopfes vorteilhaft mehr als 15 mm, bevorzugt mehr als 17,5 mm, insbesondere mehr als 20 mm, betragen.

Eine Auswahl von mechanisch betätigbaren Betätigungselementen kann an der Eingabeeinrichtung vorgesehen sein. Insbesondere können im Stand der Technik übliche Betätigungselemente verwendet werden, um der Bedienperson die sonst auch übliche Eingabemöglichkeit zur Steuerung der Erdbohrvorrichtung zu erlauben. Die Größe und/oder Anordnung der Betätigungselemente kann gegenüber dem Stand der Technik variieren, insbesondere kann ein Control-Stick an der Eingabeeinrichtung kleiner ausgestaltet sein als ein im Führerstand der Bedienkabine angeordneter Multifunktions-Joystick.

In einer besonders bevorzugten Ausführungsform kann an der Eingabeeinrichtung ein kapazitives oder mechanisch betätigbares Betätigungselement und/oder ein Funktransmitter vorgesehen sein, um insbesondere festzustellen, ob die mit der Bedienung der Erdbohrvorrichtung betraute Bedienperson die Eingabeeinrichtung hält bzw. mit ihren Händen umfasst. Insofern kann ein Betätigungselement und/oder ein Funktransmitter vorgesehen sein, mit dem festgestellt werden kann, ob eine Bedienperson die Eingabeeinrichtung bedienen kann bzw. in ihrem näheren Umfeld ist. Ein kapazitives oder mechanisch betätigbares Betätigungselement kann die Anwesenheit der Bedienperson ebenso wie ein Funktransmitter erkennen. Bei einem mechanisch betätigbaren Betätigungselement kann beispielsweise festgestellt werden, ob die Bedienperson das jeweilige Betätigungselement betätigt, um Eingaben und/oder ein weiteres Arbeiten der Erdbohrvorrichtung zu erlauben und nicht in einen geschützten Zustand zu überführen. Es kann beispielsweise vorgesehen sein, dass eine Eingabe eines Parameters nur dann erfolgt, wenn das jeweilige Betätigungselement positiv erkannt hat, dass die Bedienperson die Eingabeeinrichtung hält bzw. mit den Händen umfasst oder gleichzeitig das Betätigungselement betätigt. Hierdurch kann festgestellt werden, ob beispielsweise die Bedienperson die Eingabeeinrichtung bei Seite gelegt hat, um beispielsweise eine Arbeit an der Erdbohrvorrichtung vorzunehmen bzw. auf diese zuzugreifen, wobei die Erdbohrvorrichtung immer noch eine Erdbohrung vornimmt und das Bohrgestänge antreibt. In einem solchen Falle kann eine Abschaltung bzw. ein Überführen in einen Ruhezustand der Erdbohrvorrichtung vorgenommen werden. Die Eingabeeinrichtung kann in einem derartigen Fall ein Signal entsprechend einem Parameter, der in einer realen Anweisung "Erzwinge Ruhezustand" oder "Notabschaltung" bedeuten kann, an die Steuereinrichtung übermitteln. Es kann vorgesehen sein, dass sich der "Ruhezustand" der Erdbohrvorrichtung von dem Zustand der Erdbohrvorrichtung nach einer "Notabschaltung" unterscheidet; bei einer "Notabschaltung" kann es zu einer Abschaltung der Erdbohrvorrichtung kommen, wohingegen bei einem "Ruhezustand" die Aggregate und/oder Antriebe der Erdbohrvorrichtung weiter eingeschaltet aber antriebslos geschaltet bleiben.

In einer bevorzugten Ausführungsform ist die Sensitivität des mechanisch betätigbaren Betätigungselements (a) mechanisch und/oder (b) mittels einer Software, die mittels eines Sensors und eines Gegenelements mit dem Betätigungselement funktional gekoppelt ist, einstellbar. Hierdurch kann die Möglichkeit geschaffen werden, dass auch unter unterschiedlichen Voraussetzungen, beispielsweise mit oder ohne Handschuhe, eine Bedienperson die Sensitivität, insbesondere eines Control-Sticks oder eines Drehstellers, einstellen kann. Beispielsweise sind zwei verschiedene Einstellungen für die Sensitivität eines Bedienelements möglich: 1) Bedienung erfolgt mit Handschuh oder 2) Bedienung erfolgt ohne Handschuh. Es kann auch vorgesehen sein, dass die Sensitivität in Abhängigkeit von der Art der Eingabe bzw. des Parameters eingestellt werden kann. Die Einstellung kann durch den Prozessor in der Eingabeeinrichtung vorgenommen werden.

In einer bevorzugten Ausführungsform weist die Eingabeeinrichtung mindestens einen, insbesondere zwei, mechanisch betätigbare Betätigungselemente, insbesondere einen bzw. zwei Druckknöpfe, auf, die mindestens so beabstandet zueinander an der Eingabeeinrichtung vorliegen, dass eine zweihändige Betätigung erforderlich ist. Hierdurch kann eine sogenannte Totmann-Einrichtung geschaffen werden, mit der überprüft werden kann, ob eine Bedienperson anwesend oder handlungsfähig ist. Wird erkannt, dass eine Betätigung eines der Betätigungselemente nicht erfolgt, so kann daraus geschlossen werden, dass die Bedienperson nicht anwesend und/oder handlungsunfähig ist, wodurch ein Signal oder eine Schalthandlung ausgelöst werden kann. Hierdurch kann ein erhöhtes Maß an Sicherheit bei dem Betrieb der Erdbohrvorrichtung erreicht werden. Beispielsweise kann eine Bedienperson mittels eines haptischen Signals, einer visuellen Anzeige und/oder eines akustischen Signals aufgefordert werden, das bzw. die beiden Betätigungselemente zu betätigen; erfolgt die Betätigung nicht, so kann ein Signal oder eine Schalthandlung ausgelöst werden, die die Erdbohrvorrichtung in einen Ruhezustand überführt oder (not-)abschaltet. Das Vorsehen von zwei mechanisch betätigbaren Betätigungselementen, von denen nur eines als sogenannte Totmann-Einrichtung verwendet werden muss, kann den Vorteil liefern, dass - sofern die mechanisch betätigbaren Betätigungselemente sowohl rechts als auch links an der Eingabeeinrichtung vorgesehen sind - die Eingabeeinrichtung sowohl von rechtshändischen als auch von linkshändischen Bedienpersonen ergonomisch einfach bedient werden kann. Es kann demnach ausreichen, dass entweder links oder rechts eine Totmann-Einrichtung ausgestaltet ist. Allerdings trägt das Vorsehen der zwei Möglichkeiten sowohl rechts als auch links den möglichen Anforderungen der Bedienperson Rechnung.

Die Eingabeeinrichtung kann eine, insbesondere unterbrochene oder geschlossene, Umfangsaußenkontur aufweisen, die die Seiten der Eingabeeinrichtung einhüllen kann. Die Umfangsaußenkontur kann an Seiten des Umfangs, die nicht vollständig geschlossen sind, einen Abschnitt aufweisen, der durch eine Verbindungslinie gebildet ist, bei der Punkte der Umfangsaußenkontur miteinander verbunden sind und die Umfangsaußenkontur dadurch geschlossen werden kann. Die Umfangsaußenkontur kann im Wesentlichen rechteckförmig, quadratisch, polygonförmig, rund, kreisförmig und/oder elliptisch über den gesamten Bereich oder auch nur abschnittsweise ausgebildet sein. Mischformen und Kombinationen der vorgenannten Formen sind möglich. Insbesondere kann es vorgesehen sein, dass die Eingabeeinrichtung im Wesentlichen rechteckförmig bzw. quaderförmig ausgebildet ist und eine Abmessung im Bereich von 15 cm bis 50 cm in der Breite, bevorzugt 20 cm bis 40 cm in der Breite, 10 cm bis 30 cm in der Länge, bevorzugt 15 cm bis 25 cm in der Länge, und 3 cm bis 15 cm in der Höhe, bevorzugt 5 cm bis 10 cm in der Höhe, aufweist.

Es kann vorgesehen sein, dass die Eingabeeinrichtung mindestens einen Vorsprung oder mehrere Vorsprünge, insbesondere zwei, insbesondere hinsichtlich der vorgenannten Formen aufweist, die für ein Erfassen mittels der Hände der Bedienperson ausgestaltet sein können. Die Vorsprünge können dabei gegenüber der rechteckförmigen, quadratischen, polygonförmigen, runden, kreisförmigen und/oder elliptischen Form der Eingabeeinrichtung vorragen. Die mechanisch betätigbaren Betätigungselemente können insbesondere an einem oder jedem der Vorsprünge ausgebildet sein. Die Vorsprünge können dabei derart an der Eingabeeinrichtung ausgebildet sein, dass sich eine der Bedienperson zugewandte Fläche mittels des Vorsprungs bzw. der Vorsprünge ergibt, die eine Oberfläche ergibt, die insbesondere in einer Ebene liegen kann. Es kann vorgesehen sein, dass die Vorsprünge an einer Fläche mit einer oben genannten Form vorstehen, um insbesondere eine Aufnahme für eine in der Beschreibung im Nachfolgenden beschriebenen Anzeigeeinrichtung vollumfänglich oder abschnittsweise zu bilden. Der oder die Vorsprünge können gegenüber einer Grundfläche bzw. einer Grundplatte hervorragen. Der oder die Vorsprünge können zumindest abschnittsweise einen Rand an einer Grundplatte, die eine oben genannte Form ausbildet, bilden. Der oder die Vorsprünge können gegenüber der Grundplatte nach vorne versetzt sein. Sind mehrere Vorsprünge vorhanden, können die Vorsprünge in derselben Richtung gegenüber einer Grundfläche bzw. Grundplatte vorstehen und einen Rand an dieser ausbilden. Die Grundplatte kann insbesondere eine Außenumfangskontur einer Anzeigeeinrichtung nachbilden. Die Grundplatte kann vollständig geschlossen sein oder Durchbrüche aufweisen. An der Grundplatte kann am Rand zumindest teilweise oder geschlossen eine Wandung vorstehen, die eine nachfolgend in der Beschreibung beschriebene Anzeigeeinrichtung zumindest abschnittsweise oder vollständig umfangsseitig umgeben kann.

Eine geschwungene Anpassung der Vorsprünge an die Form der Hände der Bedienperson ist möglich, die sich insbesondere auf Ecken eines Vorsprungs bezieht. Der jeweilige Vorsprung kann an die Abmessungen einer Hand einer Bedienperson angepasst sein; hierdurch kann die Eingabeeinrichtung in den anderen Bereichen unabhängig von den Abmessungen der Hände der Bedienperson ausgebildet sein; nur im Bereich der Vorsprünge kann eine Anpassung an die Abmessungen und Form der Hände erfolgen. Eine Anpassung an die Form und/oder Abmessungen der Hände der Bedienperson, die eine Verringerung der Bauform bedeuten kann, kann so lediglich auf die Vorsprünge bezogen sein.

Der oder die genannten Vorsprünge können für ein gutes Umgreifen mittels einer Hand einer Bedienperson einen Durchmesser im Bereich von 3 cm bis 5 cm, bevorzugt 3 cm bis 4 cm haben. Die Länge eines Vorsprungs kann für ein gutes, insbesondere ermüdungsfreies, Halten mittels einer Hand einer Bedienperson größer als 10 cm ausgebildet sein, bevorzugt größer als 15 cm, um beispielsweise auch zu berücksichtigen, dass die Bedienperson einen Handschuh trägt.

Sofern mehr als ein Vorsprung an der Eingabeeinrichtung ausgebildet ist, so können die Vorsprünge an gegenüberliegenden Seiten der Eingabeeinrichtung ausgestaltet sein. Eine spiegelsymmetrische Anordnung der Vorsprünge ist möglich. Die mechanisch betätigbaren Betätigungselemente können beim Vorsehen mehrerer Vorsprünge an den Vorsprüngen spiegelsymmetrisch zueinander ausgebildet sein.

Wird der jeweilige Vorsprung durch die dafür vorgesehene Hand der Bedienperson ergriffen, so kann an dem Vorsprung im Bereich des Daumens ein Control-Stick angeordnet sein. Vorzugsweise ist an jedem der Vorsprünge ein Control-Stick im Bereich des Daumens angeordnet. Bevorzugt erhebt sich ein als Control-Stick ausgebildetes mechanisch betätigbares Betätigungselement aus einer im Wesentlichen ebenen bzw. nicht gekrümmten Fläche. Der Control-Stick kann sich von einer der Bedienperson zugewandten Fläche der Eingabeeinrichtung erheben. Insbesondere kann sich ein Control-Stick von einer zur Grundfläche der Eingabeeinrichtung, die im Wesentlichen durch die Umfangsaußenkontur festgelegt sein kann, parallelen Fläche erstrecken.

Ist ein Control-Stick an der Eingabeeinrichtung vorgesehen, so kann an einer von der Fläche für den Control-Stick unterschiedlichen Fläche des Vorsprungs insbesondere ein Drehsteller angeordnet sein. Unabhängig vom Vorsehen eines Control-Sticks kann ein Drehsteller insbesondere an einer Fläche des Vorsprungs angeordnet sein, die sich von der Bedienperson weg erstreckt. Die Fläche, an der ein Drehsteller angeordnet ist, kann insbesondere mit einer Fläche, an der ein Control-Stick vorgesehen ist, einen Winkel einschließen, der 10° bis 60°, bevorzugt 20° bis 50°, einschließt. Der Drehsteller kann insbesondere derart angeordnet sein, dass er von einem Zeigefinger oder Mittelfinger der Bedienperson ungezwungen betätigt werden kann, wenn die Bedienperson den gegebenenfalls vorgesehenen Vorsprung an der Eingabeeinrichtung ergreift.

Ist an der Eingabeeinrichtung ein Control-Stick vorgesehen, so kann an einer für den Control-Stick vorgesehenen unterschiedlichen Fläche insbesondere ein Druckknopf angeordnet sein. Ein Druckknopf kann insbesondere an einer Fläche des Vorsprungs angeordnet sein, die sich von der Bedienperson weg erstreckt. Die Fläche, an der der Druckknopf vorgesehen sein kann, kann, sofern ein Control-Stick vorgesehen ist, der Fläche gegenüberliegen, aus der sich der Control-Stick erhebt. Die Fläche, an der ein Druckknopf angeordnet ist, kann insbesondere mit einer Fläche, an der ein Control-Stick vorgesehen ist, einen Winkel einschließen, der 10° bis 60°, bevorzugt 20° bis 50°, einschließt. Der Druckknopf kann insbesondere derart angeordnet sein, dass er von einem Zeigefinger, Mittelfinger oder Ringfinger einer Bedienperson ungezwungen betätigt werden kann, wenn die Bedienperson den gegebenenfalls vorgesehenen Vorsprung ergreift.

Es kann vorgesehen sein, dass ein Druckknopf und ein Drehsteller an einer gleichen Fläche beabstandet voneinander vorliegen können, wobei insbesondere eine Betätigung mit unterschiedlichen Fingern einer Bedienperson möglich ist.

An einem Vorsprung der Eingabeeinrichtung können im Wesentlichen drei Flächen ausgebildet sein, an denen jeweils mindestens ein mechanisch betätigbares Betätigungselement angeordnet sein. Die Flächen an denen ein mechanisch betätigbares Betätigungselement vorgesehen ist, können eine Krümmung aufweisen. Ein als Drehsteller ausgebildetes mechanisch betätigbares Betätigungselement kann vorzugsweise an einer eine Krümmung aufweisenden Fläche angeordnet sein, wobei die Krümmung der Fläche der Krümmung des Drehstellers im Wesentlichen entsprechen kann, so dass insbesondere eine Betätigung des Drehstellers über einen Winkelbereich erfolgen kann, der größer als 180°, größer als 190°, größer als 200°, größer als 210°, größer als 220°, größer als 230°, größer als 240°, größer als 250°, größer als 260°, größer als 270°, größer als 280°, größer als 290°, größer als 300° ist. Eine Betätigung eines Drehstellers kann so auch einfach von einer Bedienperson, die Handschuhe tragen kann, durchgeführt werden.

Ein als Druckknopf ausgebildetes mechanisch betätigbares Betätigungselement kann vorzugsweise an einer eine Krümmung aufweisenden Fläche angeordnet sein. Ein Druckknopf kann dabei eine im Wesentlichen der Krümmung der Fläche entsprechende Krümmung aufweisen. Es kann vorgesehen sein, dass eine Betätigung des Druckknopfs über einen größeren Winkelbereich möglich ist, die dem Winkelbereich der Krümmung entsprechen kann. Es kann eine Betätigung erfolgen, auch wenn der Druckknopf nicht geradlinig betätigt wird.

Eine Strukturierung der Eingabeeinrichtung zur zumindest teilweisen oder vollständigen Aufnahme der Anzeigeeinrichtung, ist möglich, wobei eine Aufnahme im Sinne der Beschreibung eine Möglichkeit einer Verbindung zwischen den beiden Einrichtungen, insbesondere der Eingabeeinrichtung und der Anzeigeeinrichtung betrifft, die insbesondere formschlüssig und/oder kraftschlüssig sein kann.

In einer bevorzugten Ausführungsform weist die Eingabeeinrichtung eine Innenkontur auf, die an die Außenkontur der Anzeigeeinrichtung angepasst ist, wobei die Eingabeeinrichtung die Anzeigeeinrichtung zumindest teilweise entlang eines Abschnitts der Außenkontur der Anzeigeeinrichtung umgibt. Auf diese Weise kann eine Verbindung zwischen der Eingabeeinrichtung und der Anzeigeeinrichtung geschaffen werden, bei der die Anzeigeeinrichtung von der Eingabeeinrichtung zumindest teilweise umgeben ist. Die Anzeigeeinrichtung kann innerhalb der Eingabeeinrichtung vorgesehen sein, wobei der Begriff "innerhalb" auch den Fall umfasst, dass die Eingabeeinrichtung die Anzeigeeinrichtung nicht vollständig umschließt. Eine im Wesentlichen zentrale Anordnung der Eingabeeinrichtung um die Anzeigeeinrichtung ist möglich. Insbesondere kann die Eingabeeinrichtung die Anzeigeeinrichtung an einer, zwei, drei oder vier Seiten kontaktieren. Zwischen Anzeigeeinrichtung und Eingabeeinrichtung kann ein Formschluss und/oder ein Reibschluss ausgebildet werden. Insbesondere der Formschluss kann - ebenso wie der Reibschluss - wahlweise gelöst werden, um die mechanische Verbindung zu trennen.

In einer bevorzugten Ausführungsform weist die Eingabeeinrichtung eine, nicht notwendigerweise ebene, Fläche auf, auf der mindestens zwei Betätigungselemente im Bereich zweier benachbarter Ecken und/oder gegenüberliegender Ränder angeordnet sind. Die Ecken und/oder Ränder können dabei auch an einem oder mehreren Vorsprüngen gebildet sein. Hierdurch ist eine ergonomisch für die Betätigungsperson günstige Anordnung zweier Betätigungselemente möglich. Den Grundsätzen einer optimalen Anpassung kann somit genügt werden. Arbeitsmedizinische, benutzerfreundliche oder arbeitswissenschaftliche bzw. körpergerechte Ausgestaltungen können für die Bedienperson berücksichtigt werden.

In einer besonders bevorzugten Ausführungsform kann die Eingabeeinrichtung im Bereich der Ecken und/oder der Ränder - gegebenenfalls im Bereich eines Vorsprungs - von einer Hand einer Bedienperson umgriffen werden. Ferner kann in der bevorzugten Ausführungsform mindestens ein Betätigungselement im Bereich der Ecken und/oder der Ränder - gegebenenfalls an einem oder mehreren Vorsprüngen - derart angeordnet sein, dass es von einem Finger oder dem Daumen des Anwenders beim Umgreifen der Ecken und/oder der Ränder erreichbar ist. Es hat sich hierbei herausgestellt, dass eine optimale Anpassung unter ergonomischen Gesichtspunkten, bei denen auch arbeitsmedizinische und arbeitswissenschaftliche sowie benutzerfreundliche Kriterien einbezogen wurden, erfüllt wird. Beispielsweise kann die Eingabeeinrichtung mit der Dicke der Ecken und/oder Ränder an eine Hand einer Bedienperson angepasst sein, wobei berücksichtigt werden kann, dass die Bedienperson Handschuhe oder keine Handschuhe trägt.

Insbesondere kann es sich bei den Betätigungselementen, die im Bereich der Ecken und/oder der Ränder angeordnet sind, um Control-Sticks handeln. Insbesondere können die Control-Sticks auf einer Fläche der Eingabeeinrichtung angeordnet sein, die eine Grundfläche bildet bzw. parallel versetzt zu dieser angeordnet ist.

In einer bevorzugten Ausführungsform ist die Eingabeeinrichtung ausgestaltet, zur Kommunikation mit der Steuereinrichtung der Erdbohrvorrichtung ein oder mehrere Funkbänder zu verwenden. Im Sinne der Beschreibung bezeichnet ein Frequenzband Frequenzbereiche, mithin Teilbereiche des elektromagnetischen Spektrums der zur technischen Kommunikation verwendeten elektromagnetischen Wellen. Dabei sind Aufteilungen nach Frequenz, Wellenlänge oder Nutzung üblich. Verschiedene Bezeichnungen der Frequenzbänder, insbesondere international, sind möglich.

In einer bevorzugten Ausführungsform weist die Eingabeeinrichtung ein oder mehrere Antennen auf, um Signalwege, insbesondere in einer Richtung, zur Verfügung zu stellen, um beispielsweise die Sicherheit beim Betrieb der Erdbohrvorrichtung zu erhöhen. Es kann vorgesehen sein, dass mittels einer Antenne eine bidirektionale Übertragung von Signalen zwischen der Eingabeeinrichtung und der Steuereinrichtung möglich ist. Es kann aber auch vorgesehen sein, dass mindestens je eine Antenne für eine Richtung (von der Eingabeeinrichtung zur Steuereinrichtung und von der Steuereinrichtung zur Eingabeeinrichtung) vorgesehen ist und für die beiden Richtungen unterschiedliche Antennen verwendet werden. Die Antenne(n) kann bzw. können mit dem Prozessor der Eingabeeinrichtung verbunden sein.

Eine bidirektionale Kommunikation zwischen der Eingabeeinrichtung und der Steuereinrichtung ist möglich. Beispielsweise kann die Steuereinrichtung das Durchführen einer Eingabe eines Parameters bestätigen oder der Eingabeeinrichtung übermitteln, dass ein Fehler bei der Eingabe und/oder Übertragung zur Steuereinrichtung erfolgt ist.

In einer bevorzugten Ausführungsform weist die Erdbohrvorrichtung eine, zwei oder mehr Antennen für die Kommunikation mit der Eingabeeinrichtung auf. Die Erdbohrvorrichtung kann mittels der Steuereinrichtung insbesondere das Signal verwenden, welches das stärkste, beste bzw. stabilste ist.

In einer bevorzugten Ausführungsform sind für die Kommunikation mit der Anzeigeeinrichtung an der Erdbohrvorrichtung ein oder mehrere Antennen angebracht. Die Verwendung von insbesondere zwei Antennen an der Erdbohrvorrichtung bietet die Möglichkeit, dass jeweils das Signal von der Steuereinrichtung der Erdbohrvorrichtung verwendet werden kann, welches das beste, stabilste oder stärkste Signal an der jeweiligen Antenne ist. Bei der Verwendung mehrerer Antennen können Störungseinflüsse minimiert oder sogar ausgeschaltet werden. In einer bevorzugten Ausführungsform kann sich an der Anzeigeeinrichtung eine, insbesondere integrierte, Antenne befinden. Für eine Reichweitenerhöhung kann an der Anzeigeeinrichtung in einer bevorzugten Ausführungsform eine weitere bzw. zusätzliche Antenne angeschraubt werden. Die Möglichkeit einer Reichweitenerhöhung bietet sich insbesondere dann an, wenn die Bedienperson über dem Bohrtrassenverlauf sehr weit von der Erdbohrvorrichtung beabstandet ist. Es kann dabei auch vorgesehen sein, dass mehrere Antennen an der Anzeigeeinrichtung vorgesehen sind, von denen jeweils das Signal abgegriffen wird, welches das beste, stabilste bzw. stärkste ist.

In einer bevorzugten Ausführungsform weist die Eingabeeinrichtung eine Statusanzeige zum Anzeigen eines Zustands auf. Die Statusanzeige kann einen Zustand hinsichtlich einer Energieversorgung der Eingabeeinrichtung, eine Übertragung von Daten und/oder Signalen von der Eingabeeinrichtung zur Steuereinrichtung, eine Signalstärke, einen Hinweis, dass die Eingabeeinrichtung ein oder ausgeschaltet ist, und/oder eine Fehlermeldung betreffen. Die Statusanzeige kann auf eine wesentliche Information reduziert sein, die beispielsweise nur dann leuchtet, wenn ein bestimmter - beispielsweise kritischer - Zustand erreicht wird. Beispielsweise kann die Statusanzeige derart ausgestaltet sein, dass eine verringerte Energieversorgung bzw. eine in nächster Zeit zur Neige gehende Energieversorgung der Eingabeeinrichtung erkannt wurde. Es kann alternativ oder zusätzlich vorgesehen sein, dass die Statusanzeige anzeigt, dass beim Übertragen von Daten von der Eingabeeinrichtung zur Steuereinrichtung ein Fehler aufgetaucht ist. Alternativ oder zusätzlich kann die Statusanzeige anzeigen, dass die von einem Betätigungselement erzeugten Signale fehlerhaft sind. Alternativ oder zusätzlich kann die Statusanzeige anzeigen, dass an der Erdbohrvorrichtung bzw. der Steuereinrichtung ein Fehler, insbesondere in Form eines Signals einer einen kritischen Zustand überwachenden Einrichtung, festgestellt wurde. Die Statusanzeige kann eine Klartextanzeige, ein einfaches Leuchtmittel, insbesondere eine LED, die farbig ausgestaltet sein kann, sein. Im Falle eines einfachen Leuchtmittels kann die Farbe des Leuchtmittels mit dem Zustand, der der Bedienperson angezeigt werden soll, korrespondieren. Beispielsweise kann sich die Farbe verändern bzw. ein anders farbiges Leuchtmittel angesteuert bzw. zum Leuchten gebracht werden, wenn sich die Art des Zustands bzw. der Zustand ändert. Beispielsweise kann vorgesehen sein, dass, wenn die Erdbohrvorrichtung in Betrieb ist und kein Fehler erfasst wurde, ein grünes Leuchtmittel verwendet wird. Verändert sich der Zustand im Sinne einer Verschlechterung, beispielsweise hat sich die Energieversorgung hinsichtlich der Kapazität unter ein bestimmtes Maß verringert, so kann die Farbe Orange verwendet werden. Eine weitere Verringerung oder ein Fehler kann mit der Farbe Rot signalisiert werden. Im Bereich der Statusanzeige oder als Teil der Statusanzeige kann, insbesondere in Form eines Aufdrucks, ein Symbol angeordnet oder dargestellt werden, welches indiziert bzw. anzeigt, welchen Hinweis die Statusanzeige betrifft. Beispielsweise kann für die Statusanzeige betreffendeine Energieversorgung ein Batterie- oder Akkusymbol verwendet werden. Für eine Statusanzeige betreffend einen Übertragungsfehler kann ein Antennensymbol verwendet werden.

In einer bevorzugten Ausführungsform weist die Eingabeeinrichtung eine Anbindung für einen Tragegurt einer Bedienperson auf, wodurch die Bedienperson hinsichtlich des Haltens des Gewichts der Eingabeeinrichtung entlastet wird. Ein ermüdungsfreieres, angenehmeres Arbeiten ist möglich. Es kann auch vorgesehen sein, dass die Anbindung mittels eines Tragegurts dazu verwendet werden kann, die Eingabeeinrichtung zu tragen. Die Bedienperson kann die Eingabeeinrichtung loslassen und die Eingabeeinrichtung hängt dennoch an der Bedienperson, beispielsweise an einem Schulter-, Halsoder Hüftgurt.

In einer bevorzugten Ausführungsform weist die Eingabeeinrichtung ein Element eines Anbindungspaares auf, das mit einem weiteren Element des Anbindungspaares, welches an der Erdbohrvorrichtung angeordnet bzw. ausgebildet ist, mechanisch und/oder elektrisch zusammenwirken kann. Bei dem Anbindungspaar kann es sich um ein Paar von Elementen zur Ausbildung einer mechanischen und/oder elektrischen Verbindung handeln. Die Eingabeeinrichtung kann mittels der mechanischen Verbindung sicher an der Erdbohrvorrichtung gehalten werden. Mittels einer elektrischen Verbindung kann beispielsweise eine Signalübertragung und/oder Energieübertragung möglich sein. Das weitere Element des Anbindungspaares kann insbesondere im Führerstand an der Erdbohrvorrichtung vorhanden sein. Mittels des weiteren Elements des Anbindungspaares im Führerstand kann die Möglichkeit geschaffen werden, die Eingabeeinrichtung an einer fest vorgegebenen Stelle der Erdbohrvorrichtung zu verwenden, die der Bedienperson vertraut ist und in der die Bedienperson von den Umgebungseinflüssen im Wesentlichen geschützt ist.

Die Erfindung schafft auch ein Verfahren zum Steuern eines Betriebs einer Erdbohrvorrichtung nach Anspruch 11.

Die Erfindung schafft auch eine Verwendung einer Erdbohrvorrichtung zum Bewegen eines Bohrgestänges für das Einbringen einer Erdbohrung in Erdreich nach Anspruch 12.

In einer bevorzugten Ausführungsform weist die Anzeigeeinrichtung Kommunikationsmittel zum Übertragen von Daten und/oder Signalen zwischen der Anzeigeeinrichtung und einem Ortungssystem für den Bohrkopf auf. Hierdurch kann neben den Parametern bzw. Informationen, die für den Betrieb der Erdbohrvorrichtung auf der Anzeigeeinrichtung dargestellt werden, auch auf der Anzeigeeinrichtung dargestellt werden, wo im dreidimensionalen Raum der Bohrkopf des Bohrgestänges vom Ortungssystem ermittelt wurde. Die Steuereinheit kann damit derart ausgestaltet sein, die Signale eines Ortungssystems zu prozessieren und derart zu verwerten, den momentanen bzw. ermittelten Ort des Bohrkopfs anzuzeigen. Diese Anzeige kann auf unterschiedliche Arten erfolgen. Eine bildliche Darstellung in einer, insbesondere wählbaren, Karte, die dreidimensional oder zweidimensional sein kann, ist möglich. Es kann vorgesehen sein, dass das Ortungssystem nicht direkt die Daten zur Anzeigeeinrichtung übermittelt, sondern die Daten an ein Gateway übermittelt, welches insbesondere alle Daten - nicht nur die Ortungsdaten - sondern auch die Betriebsdaten und die Bohrdaten, die aufgezeichnet werden, sammelt. Das Gateway kann dann seinerseits die Ortungsdaten und auch weitere Daten, die gesammelt werden, in eine Cloud senden. Von hieraus können sie abgerufen, ausgewertet und übermittelt werden. Die Anzeigeeinrichtung ist zur Auswertung der Daten ausgestaltet. Sofern beschrieben wird, dass die Anzeigeeinrichtung Kommunikationsmittel zum Übertragen von Daten und/oder Signalen zwischen der Anzeigeeinrichtung und einem Ortungssystem aufweist, so wird hierunter auch verstanden, dass die Anzeigeeinrichtung diese Daten abrufen und/oder auswerten kann, beispielsweise mittels Abrufen aus der Cloud. Alternativ oder zusätzlich ist es möglich, dass die Ortungsdaten auch vom Gateway direkt - ohne Zwischenschaltung einer Cloud - oder auch unmittelbar vom Ortungssystem an die Anzeigeeinrichtung gesandt und verwendet werden können.

Die Erfindung wird hinsichtlich dreier Aspekte beschrieben, die ein System, ein Verfahren und eine Verwendung betreffen. Die Ausführungen zu den einzelnen Aspekten ergänzen einander, so dass die Ausführungen für das System auch als Ausführungen der Beschreibung für das Verfahren und die Verwendung zu verstehen sind. Mit der Beschreibung des Systems sind auch Handlungen im Sinne des Verfahrens bzw. Verfahrensschritte betreffend das Verfahren und Verwendungen bzw. Verwendungsmerkmale offenbart, die für die entsprechenden Aspekte gelten.

Im Sinne der Beschreibung umfasst die Nennung eines Zahlenwertes, insbesondere einer Längenangabe oder einer Winkelangabe, nicht nur den eigentlichen Zahlenwert, sondern auch - um insbesondere fertigungstechnische Toleranzen zu berücksichtigen - einen Bereich um den konkreten Zahlenwert, der +/- 15%, bevorzugt +/- 10%, vom angegebenen Zahlenwert sein kann.

Die vorstehenden Ausführungen stellen ebenso wie die nachfolgende Beschreibung beispielhafter Ausführungsformen keinen Verzicht auf bestimmte Ausführungsformen oder Merkmale dar.

Die Erfindung wird im Folgenden beispielhaft anhand eines in den Figuren dargestellten Ausführungsbeispiels näher erläutert.

In den Zeichnungen zeigt:
- Fig. 1: eine schematische Schnittdarstellung einer Erdbohrung mittels einer Erdbohrvorrichtung;
- Fig. 2: eine schematische Darstellung der Erdbohrvorrichtung mit einer Eingabeeinrichtung;

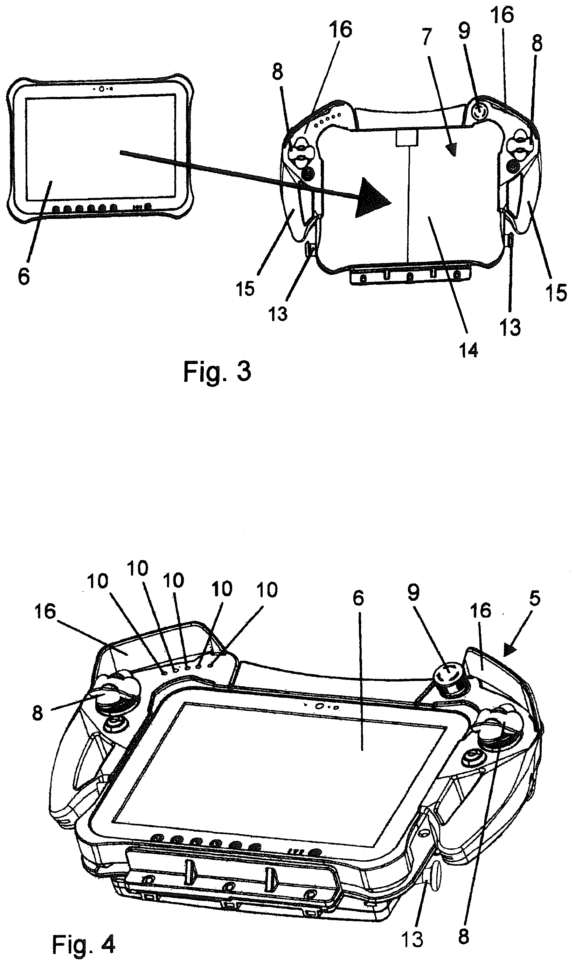

- Fig. 3: eine schematische Darstellung der Eingabeeinrichtung und einer Anzeigeeinrichtung;
- Fig. 4: die Anzeigeeinrichtung und die Eingabeeinrichtung von oben; und

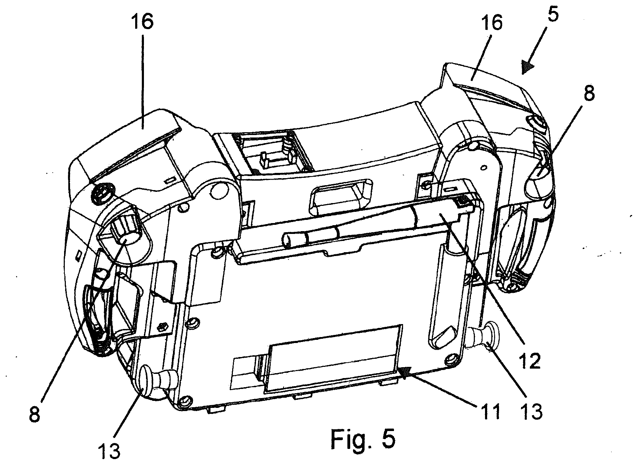

- Fig. 5: die Anzeigeeinrichtung und die Eingabeeinrichtung von unten.

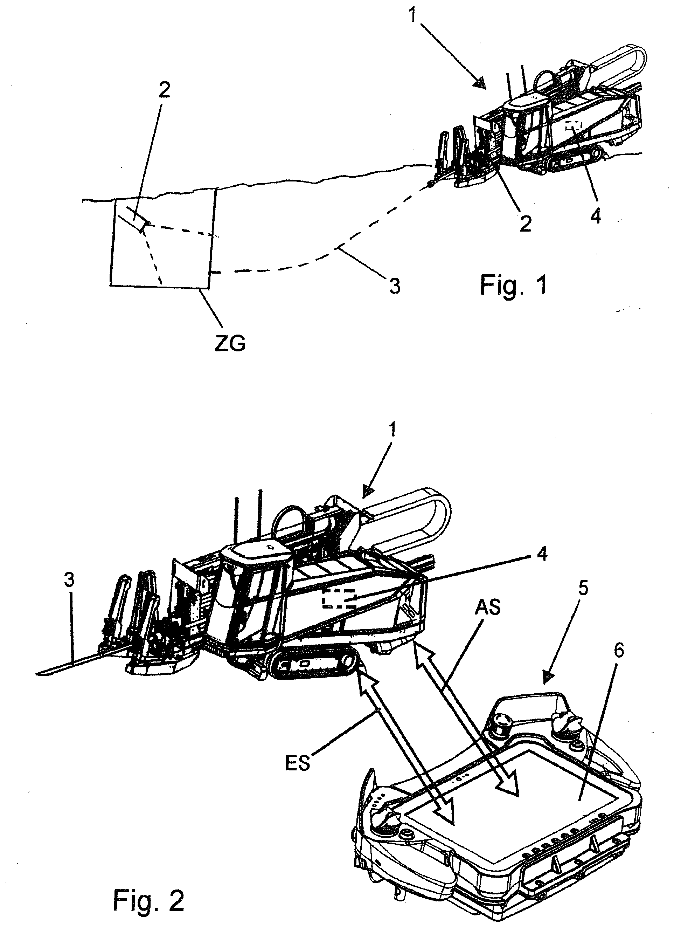

Fig. 1 zeigt in einer schematischen Darstellung eine Erdbohrvorrichtung 1, mit der eine Erdbohrung in das Erdreich durchgeführt werden kann. Es wird ein Bohrgestänge 3 durch das Erdreich bewegt.

Es sind Erfassungseinrichtungen 2 vorgesehen, die ausgestaltet sind, das Bohrgestänge 3 endseitig zum einen im Bereich der Erdbohrvorrichtung 1 und zum anderen endseitig im Bereich einer Zielgrube ZG der einzubringenden Erdbohrung zu erfassen.

Im dargestellten Ausführungsbeispiel sind die Erfassungseinrichtungen 2 jeweils als eine Kamera ausgestaltet.

Die Erdbohrvorrichtung 1 weist eine Steuereinrichtung 4 zum Betrieb der Erdbohrvorrichtung 1 auf, die schematisch mittels des gestrichelten Kästchens an der Erdbohrvorrichtung 1 visualisiert ist. Mittels der Steuereinrichtung 4 kann der Betrieb der Erdbohrvorrichtung 1 gesteuert werden.

Ferner ist eine mit der Steuereinrichtung 4 funktional gekoppelte Eingabeeinrichtung 5 vorhanden, die zum Eingeben mindestens eines Parameters für den Betrieb der Erdbohrvorrichtung 1 ausgestaltet ist (vgl. Fig. 2). Insbesondere kann ein derartiger Parameter ein Starten des Bohrens mit der Erdbohrvorrichtung 1 oder ein Stoppen eines mit der Erdbohrvorrichtung 1 durchgeführten Bohrens bewirken. Die Eingabeeinrichtung 5 ist als Fernbedienung ausgestaltet, welche kabellos mit der Steuereinrichtung 4 mittels elektromagnetischer Wellen kommuniziert.

Bei der kabellosen Kommunikation zwischen Eingabeeinrichtung 5 und der Steuereinrichtung 4 handelt es sich um eine bidirektionale Kommunikation, bei der die Eingabeeinrichtung 5 sowohl von der Steuereinrichtung 4 Signale empfängt als auch an die Steuereinrichtung 4 sendet. Die bidirektionale kabellose Kommunikation ist mittels Doppelpfeil ES visualisiert.

Wie der Fig. 1 u.a. zu entnehmen ist, weist die Erdbohrvorrichtung 1 ein Gestängemagazin auf, in dem Gestängeschüsse gelagert sind, mit denen das Bohrgestänge 3, welches schon im Erdreich verbohrt wurde, verlängert werden kann.

Ferner ist eine Anzeigeeinrichtung 6 vorgesehen, mit der Informationen und/oder Parameter für den Betrieb der Erdbohrvorrichtung 1 dargestellt werden können. Insbesondere können an der Anzeigeeinrichtung 6 Signale der Erfassungseinrichtung 2 dargestellt werden. Zur Darstellung der Informationen, Signale und Parameter ist die Anzeigeeinrichtung 6 funktional mit der Steuereinrichtung 4 und/oder der Erfassungseinrichtung 2 gekoppelt. Die Kommunikation zwischen der Anzeigeeinrichtung 6, der Steuereinrichtung 4 und/oder der Erfassungseinrichtung 2 erfolgt kabellos mittels elektromagnetischer Wellen. Die Kommunikation ist bidirektional, so dass die Anzeigeeinrichtung 6 sowohl Signale von der Steuereinrichtung 4 bzw. der Erfassungseinrichtung 2 erhalten als auch an die Steuereinrichtung 4 bzw. die Erfassungseinrichtung 2 senden kann. Die bidirektionale Kommunikation ist mittels Doppelpfeil AS visualisiert.

Wie u.a. der Fig. 2 zu entnehmen ist, ist die Anzeigeeinrichtung 6 in einer Aufnahme 7 der Eingabeeinrichtung 5 derart anordbar, dass die Anzeigeeinrichtung 6 zusammen mit der Eingabeeinrichtung 5 als Einheit mittels einer Bedienperson handhabbar ist.

Die Eingabeeinrichtung 5 weist mehrere mechanisch betätigbare Betätigungselemente 8 auf, von denen zwei als Control-Sticks ausgestaltet sind. Ferner weist die Eingabeeinrichtung 5 einen Not-Aus-Schalter 9 als mechanisch betätigbares Betätigungselement 8 auf, welcher als Druckknopf ausgestaltet ist. Die als Control-Sticks ausgestalteten Betätigungselemente 8 und der Not-Aus-Schalter 9 sind beim Halten der Eingabeeinrichtung 5 einer Bedienperson zugewandt und befinden sich in einer Ebene der Eingabeeinrichtung 5. Gegenüberliegend zu der Fläche, auf der die Control-Sticks und der Not-Aus-Schalter 9 angeordnet sind, sind zwei Drehsteller als mechanisch betätigbare Betätigungselemente 8 links und rechts der Eingabeeinrichtung 5 ausgebildet.

An der Eingabeeinrichtung 5 sind an der linken Seite mehrere Statusanzeigen 10 vorgesehen, die über einen Zustand hinsichtlich der Eingabeeinrichtung 5, der Erdbohrvorrichtung 1 und/oder eine Kommunikation zwischen der Eingabeeinrichtung 5 und der Steuereinrichtung 4 einen Hinweis liefern.

Ferner weist die Eingabeeinrichtung 5 ein an der Unterseite der Eingabeeinrichtung 5 vorgesehenes Aufnahmefach 11 für die Anordnung einer Energieversorgung der Eingabeeinrichtung 5 auf.

Eine schwenkbare Antenne 12 ist für die drahtlose Kommunikation mit der Steuereinrichtung 4 vorhanden, die hinsichtlich ihrer Ausrichtung verschwenkt und in der Länge teleskopartig veränderbar ist.

An der Eingabeeinrichtung 5 ist zum Schutz der Betätigung der mechanisch betätigbaren Betätigungselemente 8 eine Schutzerhebung 16 ausgestaltet, die im Bereich des Not-Aus-Schalters 9 und der Control-Sticks angeordnet ist.

Zum Ankoppeln eines Hals-, Schulter- oder Hüftgurts sind Verbindungselemente 13 vorgesehen, mit denen der entsprechende Gurt verbunden werden kann.

Die Eingabeeinrichtung 5 weist zur Aufnahme der Anzeigeeinrichtung 6 eine Grundplatte 14 auf, die im Wesentlichen rechteckförmig ausgebildet ist (vgl. Fig. 1). Die mechanisch betätigbaren Betätigungselemente 8 sind an griffartigen Vorsprüngen 15 der Grundplatte 14 ausgebildet, die jeweils von einer Hand einer Bedienperson umgriffen werden können, um die Betätigung durchführen zu können. Die Vorsprünge 15 erstrecken sich in einer Richtung nach oben, und bilden einen Rand um die Grundplatte 14 aus. Die Vorsprünge 15 bilden jeweils an einer Seite einen Rand. Die beiden Ränder, die durch die Vorsprünge 15 gebildet werden, liegen einander gegenüber. An den weiteren zwei Seiten der rechteckförmigen Grundplatte 14 sind weitere Randabschnitte vorhanden, die sich in die gleiche Richtung nach oben erstrecken, wie die Ränder, die durch die Vorsprünge 15 gebildet werden. Hierdurch wird ein die Grundplatte 14 zumindest teilweise umgebender Rand geschaffen, in dem die Anzeigeeinrichtung 6 angeordnet werden kann. Es kann ein Kraft-Schluss gebildet werden, wobei an den Rändern, die durch die Vorsprünge 15 gebildet werden, die Anzeigeeinrichtung 6 die Vorsprünge 15 zumindest teilweise hintergreift.

## Patentansprüche

1. System aufweisend eine Erdbohrvorrichtung (1) zum Bewegen eines Bohrgestänges (3) für das Einbringen einer Erdbohrung im Erdreich und eine Erfassungseinrichtung (2), die ausgestaltet ist, das Bohrgestänge (3) endseitig zu erfassen, **dadurch gekennzeichnet, dass** die Erfassungseinrichtung (2) im Bereich einer Zielgrube (ZS) angeordnet ist, wobei die Erfassungseinrichtung (2) ausgestaltet ist, das Vorhandensein des Bohrgestänges (3) in einer Zielgrube (ZG) zu ermitteln.

2. System nach Anspruch 1, **dadurch gekennzeichnet, dass** die Erfassungseinrichtung (2) eine Kamera, eine Bereichsscanner und/oder ein Bewegungsscanner ist.

3. System nach Anspruch 1 oder 2, **gekennzeichnet durch** eine Anzeigeeinrichtung (6) zum Anzeigen eines von der Erfassungseinrichtung (2) erfassten Zustands, wobei die Erfassungseinrichtung (2) einen Sender und die Anzeigeeinrichtung (6) einen Empfänger aufweist, und die Anzeigeeinrichtung (6) zum Prozessieren von Signalen zum Darstellen des von der Erfassungseinrichtung (2) erfassten Zustands ausgestaltet ist.

4. System nach Anspruch 3, **dadurch gekennzeichnet, dass** die Anzeigeeinrichtung (6) für eine kabellose Übertragung von Signalen ausgestaltet ist.

5. System nach Anspruch 3 oder 4, **dadurch gekennzeichnet, dass** die Anzeigeeinrichtung (6) ein Tablett, IPad, Notepad, Smartdisplay oder ähnliches ist.

6. System nach einem der Ansprüche 3 bis 5, **dadurch gekennzeichnet, dass** die Anzeigeeinrichtung (6) ein Element eines Anbindungspaares aufweist, das mit einem weiteren Element des Anbindungspaares, welches an der Erdbohrvorrichtung (1) angeordnet ist, mechanisch und/oder elektrisch zusammenwirken kann

7. System nach einem der Ansprüche 3 bis 6, **dadurch gekennzeichnet, dass** die Anzeigeeinrichtung (6) eine Steuerung aufweist, die für eine kontextsensitive Anzeige von Information auf der Anzeigeeinrichtung (6) ausgestaltet ist.

8. System nach einem der Ansprüche 1 bis 7, **gekennzeichnet durch** eine Eingabeeinrichtung (5) zum Eingeben mindestens eines Parameters für den Betrieb der Erdbohrvorrichtung (1), insbesondere eines Parameters, der ein Starten des Einbringens der Erdbohrung mit der Erdbohrvorrichtung (1) oder ein Stoppen einer mit der Erdbohrvorrichtung (1) durchgeführten Erdbohrung bewirkt.

9. System nach Anspruch 8, **dadurch gekennzeichnet, dass** die Eingabeeinrichtung (5) als Fernbedienung ausgestaltet ist.

10. System nach Anspruch 8 oder 9 sofern abhängig von einem der Ansprüche 3 bis 7, **dadurch gekennzeichnet, dass** die Eingabeeinrichtung (5) eine Innenkontur aufweist, die an die Außenkontur der Anzeigeeinrichtung (6) angepasst ist und die Eingabeeinrichtung (5) die Anzeigeeinrichtung (6) zumindest teilweise entlang eines Abschnitts der Außenkontur der Anzeigeeinrichtung (6) umgibt.

11. Verfahren zum Steuern eines Betriebs einer Erdbohrvorrichtung (1), die ein Bohrgestänge (3) für das Einbringen einer Erdbohrung im Erdreich bewegt, wobei
das Bohrgestänge (3) endseitig erfasst wird, **dadurch gekennzeichnet, dass** eine Erfassungseinrichtung (2) im Bereich einer Zielgrube (ZG) angeordnet wird und das Vorhandensein des Bohrgestänges (3) in einer Zielgrube (ZG) ermittelt wird.

12. Verwendung einer Erdbohrvorrichtung (1) zum Bewegen eines Bohrgestänges (3) für das Einbringen einer Erdbohrung im Erdreich, wobei eine Erfassungseinrichtung (2) verwendet wird, die ausgestaltet ist, das Bohrgestänge (3) endseitig zu erfassen, **dadurch gekennzeichnet, dass** die Erfassungseinrichtung (2) in einer Zielgrube (ZS) angeordnet verwendet wird, wobei die Erfassungseinrichtung (2) dazu verwendet wird, das Vorhandensein des Bohrgestänges (3) in einer Zielgrube (ZG) zu ermitteln.

## Claims

1. System comprising an earth-drilling device (1) for moving a drill string (3) for the introduction of an earth borehole in the earth and a detection device (2) which is designed to detect the drill string (3) at the end, **characterized in that** the detection device (2) is arranged in the region of a target pit (ZS), wherein the detection device (2) is designed to determine the presence of the drill string (3) in a target pit (ZG).

2. System according to Claim 1, **characterized in that** the detection device (2) is a camera, a zone scanner and/or a motion scanner.

3. System according Claim 1 or 2, **characterized by** a display device (6) for displaying a state detected by the detection device (2), wherein the detection device (2) comprises a transmitter and the display device (6) comprises a receiver, and the display device (6) is designed to process signals in order to represent the state detected by the detection device (2).

4. System according to Claim 3, **characterized in that** the display device (6) is designed for a wireless transmission of signals.

5. System according to Claim 3 or 4, **characterized in that** the display device (6) is a tablet, iPad, notepad, smart display or similar.

6. System according to one of Claims 3 to 5, **characterized in that** the display device (6) has one element of a pair of connections, which element can interact mechanically and/or electrically with a further element of the pair of connections, which element is arranged on the earth-drilling device (1).

7. System according to one of Claims 3 to 6, **characterized in that** the display device (6) has a controller which is designed for a context-sensitive display of information on the display device (6).

8. System according to one of Claims 1 to 7, **characterized by** an input device (5) for inputting at least one parameter for operation of the earth-drilling device (1), in particular a parameter which causes the introduction of the earth borehole using the earth-drilling device (1) to start or earth drilling carried out using the earth-drilling device (1) to stop.

9. System according to Claim 8, **characterized in that** the input device (5) is designed as a remote control.

10. System according to Claim 8 or 9, insofar as dependent on one of Claims 3 to 7, **characterized in that** the input device (5) has an inner contour which is adapted to the outer contour of the display device (6) and the input device (5) surrounds the display device (6) at least in part along a portion of the outer contour of the display device (6).

11. Method for controlling an operation of an earth-drilling device (1) which moves a drill string (3) for the introduction of an earth borehole in the earth, wherein said drill string (3) is detected at the end, **characterized in that** a detection device (2) is arranged in the region of a target pit (ZG) and the presence of the drill string (3) is detected in a target pit (ZG).

12. Use of an earth-drilling device (1) for moving a drill string (3) for the introduction of an earth borehole in the earth, wherein a detection device (2) is used which is designed to detect the drill string (3) at the end, **characterized in that** the detection device (2) is used arranged in a target pit (ZS), wherein the detection device (2) is used to determine the presence of the drill string (3) in a target pit (ZG).

## Revendications

1. Système présentant un dispositif de forage du sol (1) pour le déplacement d'une tige de forage (3) en vue de la réalisation d'un forage dans le sol et un dispositif de détection (2) qui est conçu pour détecter la tige de forage (3) à son extrémité, **caractérisé en ce que** le dispositif de détection (2) est disposé dans la zone d'une fosse cible (ZS), le dispositif de détection (2) étant conçu pour déterminer la présence de la tige de forage (3) dans une fosse cible (ZG).

2. Système selon la revendication 1, **caractérisé en ce que** le dispositif de détection (2) est une caméra, un scanner de zone et/ou un scanner de mouvement.

3. Système selon la revendication 1 ou 2, **caractérisé par** un dispositif d'affichage (6) pour afficher un état détecté par le dispositif de détection (2), le dispositif de détection (2) présentant un émetteur et le dispositif d'affichage (6) présentant un récepteur, et le dispositif d'affichage (6) étant conçu pour traiter des signaux afin de représenter l'état détecté par le dispositif de détection (2).

4. Système selon la revendication 3, **caractérisé en ce que** le dispositif d'affichage (6) est conçu pour une transmission sans fil de signaux.

5. Système selon la revendication 3 ou 4, **caractérisé en ce que** le dispositif d'affichage (6) est une tablette, un IPad, un bloc-notes, un écran intelligent ou similaire.

6. Système selon l'une quelconque des revendications 3 à 5, **caractérisé en ce que** le dispositif d'affichage (6) présente un élément d'une paire d'attaches qui peut interagir mécaniquement et/ou électriquement avec un autre élément de la paire d'attaches qui est disposé sur le dispositif de forage du sol (1).

7. Système selon l'une quelconque des revendications 3 à 6, **caractérisé en ce que** le dispositif d'affichage (6) présente une commande qui est conçue pour un affichage sensible au contexte d'informations sur le dispositif d'affichage (6).

8. Système selon l'une quelconque des revendications 1 à 7, **caractérisé par** un dispositif d'entrée (5) pour entrer au moins un paramètre pour le fonctionnement du dispositif de forage du sol (1), en particulier un paramètre qui provoque un démarrage de la réalisation du forage du sol avec le dispositif de forage du sol (1) ou un arrêt d'un forage du sol réalisé avec le dispositif de forage du sol (1).

9. Système selon la revendication 8, **caractérisé en ce que** le dispositif d'entrée (5) est conçu comme une télécommande.

10. Système selon la revendication 8 ou 9, pour autant qu'il dépende de l'une des revendications 3 à 7, **caractérisé en ce que** le dispositif d'entrée (5) présente un contour intérieur qui est adapté au contour extérieur du dispositif d'affichage (6) et le dispositif d'entrée (5) entoure le dispositif d'affichage (6) au moins partiellement le long d'une partie du contour extérieur du dispositif d'affichage (6).

11. Procédé de commande d'un fonctionnement d'un dispositif de forage du sol (1), qui déplace une tige de forage (3) pour la réalisation d'un forage dans le sol, la tige de forage (3) étant détectée à son extrémité, **caractérisé en ce qu'un** dispositif de détection (2) est disposé dans la zone d'une fosse cible (ZG) et la présence de la tige de forage (3) dans une fosse cible (ZG) est déterminée.

12. Utilisation d'un dispositif de forage du sol (1) pour le déplacement d'une tige de forage (3) pour la réalisation d'un forage dans le sol, un dispositif de détection (2) étant utilisé, lequel est conçu pour détecter la tige de forage (3) à son extrémité, **caractérisé en ce que** le dispositif de détection (2) est utilisé en étant disposé dans une fosse cible (ZS), le dispositif de détection (2) étant utilisé pour déterminer la présence de la tige de forage (3) dans une fosse cible (ZG).
